# DEMANDE DE BREVET EUROPEEN

(11) **EP 2 096 053 A1**
(43) Date de publication de la demande: **02.09.2009**
(21) Numéro de dépôt: 09360011.2
(22) Date de dépôt: 11.02.2009
(51) Int. Cl.: B65G 47/26, B65G 17/00, B23Q 7/14

(54) **Convoyeur monochaîne à palettes et à accumulation**

(30) Priorité: 26.02.2008 FR 0801022
(71) Demandeur: Clemessy, 68200 Mulhouse (FR)
(72) Inventeur: Bouchet, Maxime, 45330 Augerville-la-Riviere (FR); Herin, Auguste, 45210 La Selle sur le Bied (FR)
(74) Mandataire: Metz, Paul

(57) **Abrégé**

Le convoyeur (1) à palettes et à accumulation comprend une chaîne unique (10) d'entraînement des palettes (19) par au moins un pignon freiné et à chacune de ses extrémités un dispositif de renversement des palettes (19) par une surface d'entraînement portée par chaque tambour de renvoi (14, 15) coopérant avec la base de chaque palette (19) ainsi qu'une butée de chargement et une butée de déchargement et au moins une butée d'accumulation à chaque fois par un ensemble transversal de butée (67) et un dispositif de réglage de la tension de la chaîne (10) comportant un moyen de tension qui agit sur la partie de la boucle non soumise à la tension dynamique de la chaîne (10).

Cette invention intéresse notamment le domaine de l'industrie de la manutention de pièces mécaniques dans les lignes d'usinage ou d'assemblage.

## Description

La présente invention se rapporte à un convoyeur à palettes et à accumulation à entraînement par une seule chaîne centrale pour le transfert de pièces mécaniques en vue de l'approvisionnement d'une machine d'assemblage ou de traitement.

Dans les chaînes de production automatisée, notamment dans les chaînes d'assemblage, on fait souvent appel à des convoyeurs appelés aussi transporteurs pour transférer des pièces d'une machine à une autre ou d'une ligne de production à une autre.

Ces transporteurs comportent des unités individuelles porteuses appelées palettes sur lesquelles sont chargées les pièces usinées ou à usiner ou des éléments utilisés par une machine de pose ou d'assemblage en vue de constituer un ensemble ou une unité fonctionnelle technique : moteur, véhicule, appareil, ou autres.

Les convoyeurs alimentent ces machines en pièces ou sous-ensembles composant ces unités en vue d'un travail d'usinage ou d'assemblage.

Il existe déjà une grande variété de convoyeurs parmi lesquels on distingue les convoyeurs à deux chaînes d'entraînement.

L'avantage principal de ces convoyeurs à deux chaînes réside dans leur symétrie dynamique permettant de bénéficier en permanence d'une avance régulière et d'une stabilité de mouvements des palettes et de leur chargement.

Cette qualité et ces avantages se traduisent par un prix de revient élevé et une complexité dans les mécanismes.

La plupart de ces convoyeurs comportent un dispositif d'accumulation. Il s'agit de butées escamotables et déplaçables qui bloquent temporairement l'avance d'une palette provoquant l'accumulation des suivantes.

Il s'agit en général de dispositifs entièrement mécaniques sous la forme d'un butoir escamotable par exemple relevable.

La complexité technique de ces dispositifs apporte, outre un surcoût, une fiabilité moyenne et une certaine inertie.

Par ailleurs, ces convoyeurs de l'art antérieur comportent des dispositifs de renversement en extrémité sujets à des à-coups préjudiciables à terme au bon fonctionnement d'ensemble.

Le convoyeur selon l'invention a pour but de remédier à tous ces inconvénients.

A cet effet, l'invention se rapporte à un convoyeur à palettes à entraînement par une chaîne unique comprenant à chacune de ses extrémités un dispositif de renversement des palettes pour leur recyclage au niveau du tambour de renvoi ainsi qu'un dispositif de réglage de la tension de la chaîne, chaque dispositif de renversement se composant d'une association de moyens entre la base de la palette et le tambour de renvoi coopérant entre eux en vue de l'avance sans à-coups de la palette pendant le mouvement de basculement, le convoyeur comportant une pluralité de butées d'accumulation, de chargement et de déchargement et le dispositif de réglage de la tension de la chaîne présentant un dispositif tendeur de chaîne qui agit sur la boucle aval de la chaîne motrice qui n'est pas soumise à la tension de traction.

Le convoyeur présente ainsi de multiples avantages dont les principaux sont indiqués ci-après.
. simplicité et fiabilité mécaniques,
. déplacement régulier et sans à-coup des palettes aussi bien en translation qu'en renversement,
. facilité et simplicité d'entretien,
. coût d'exploitation réduit.

Ensuite, il s'agit d'un convoyeur monochaîne qui apporte un sérieux abaissement du coût de revient notamment au niveau de la fabrication.

Le guidage a été amélioré pour procurer une bonne stabilité en déplacement.

Un dispositif astucieux de réglage de la tension de la chaîne permet un mouvement de déplacement régulier et progressif.

Ensuite, l'association de moyens permettant le renversement à vitesse constante de chaque palette en extrémité du convoyeur en vue de son recyclage garantit un fonctionnement sans à-coups et donc sans usure anormale.

Finalement, la constitution de ces butées à vérin pneumatique procure l'avantage d'un mécanisme simple, propre, et de bonne fiabilité.

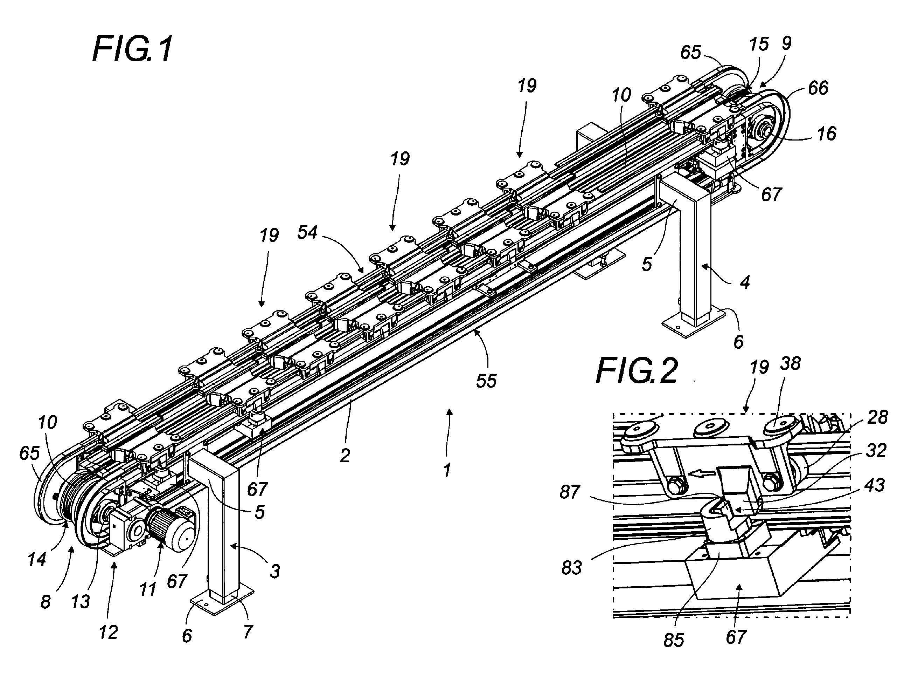

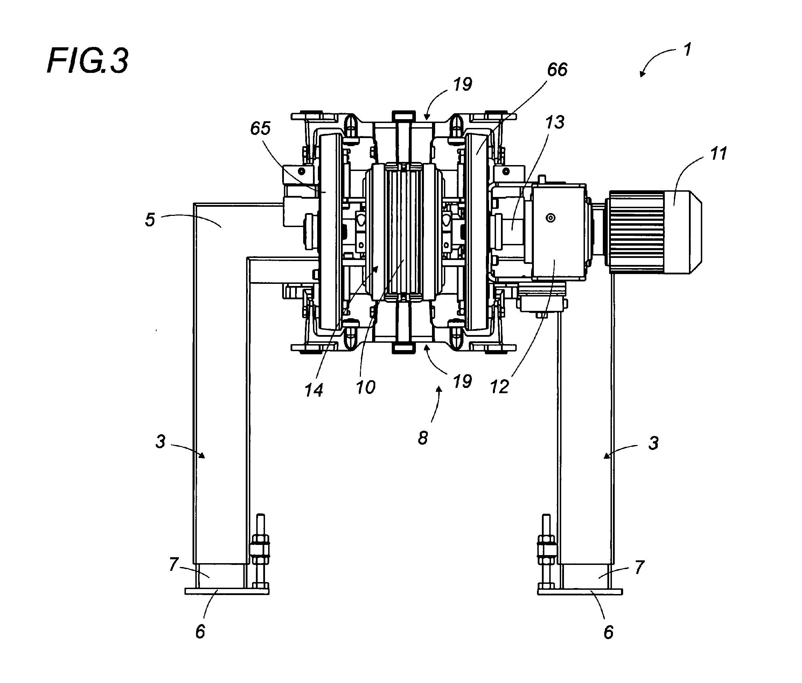

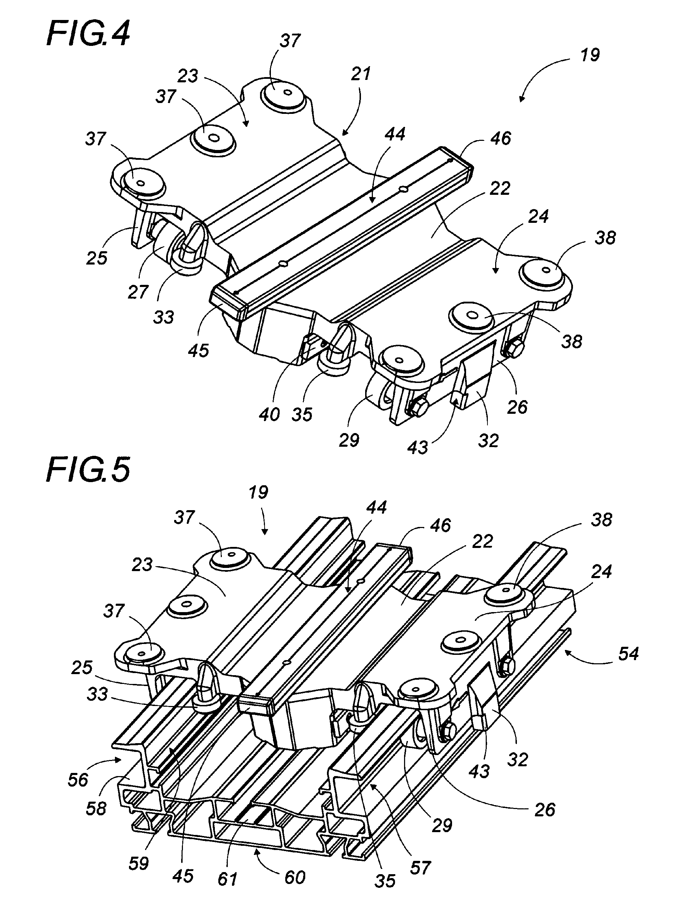

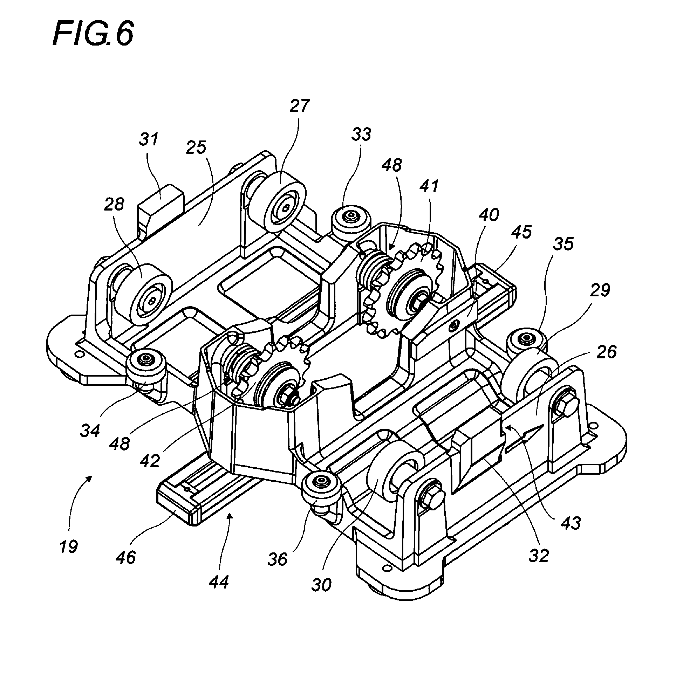

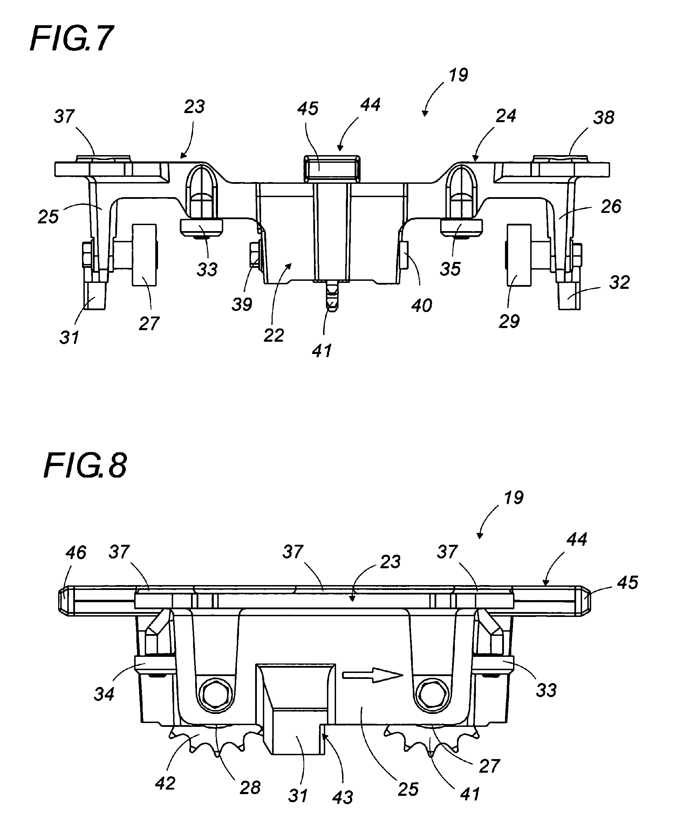

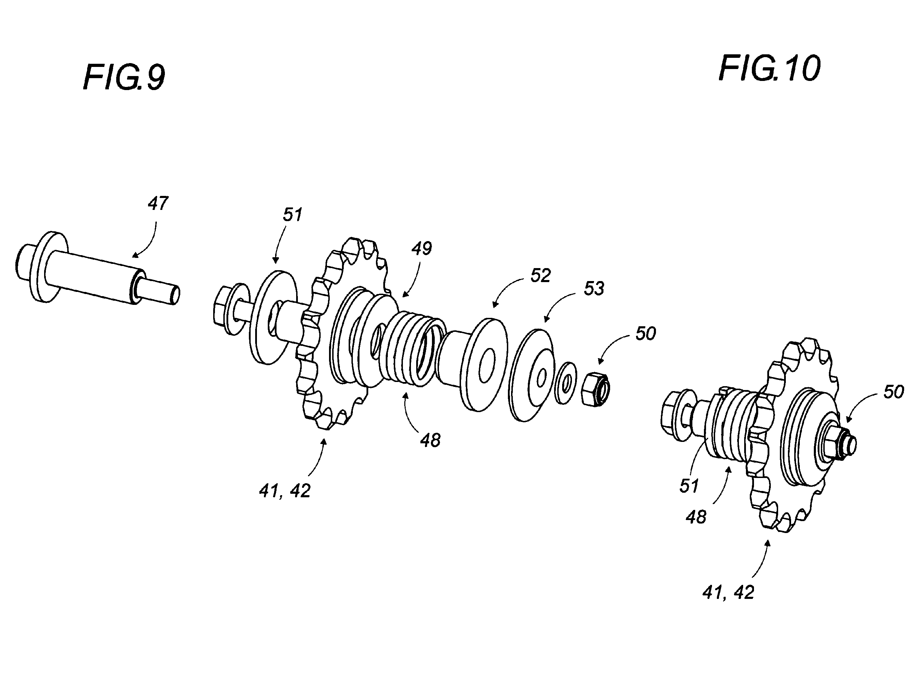

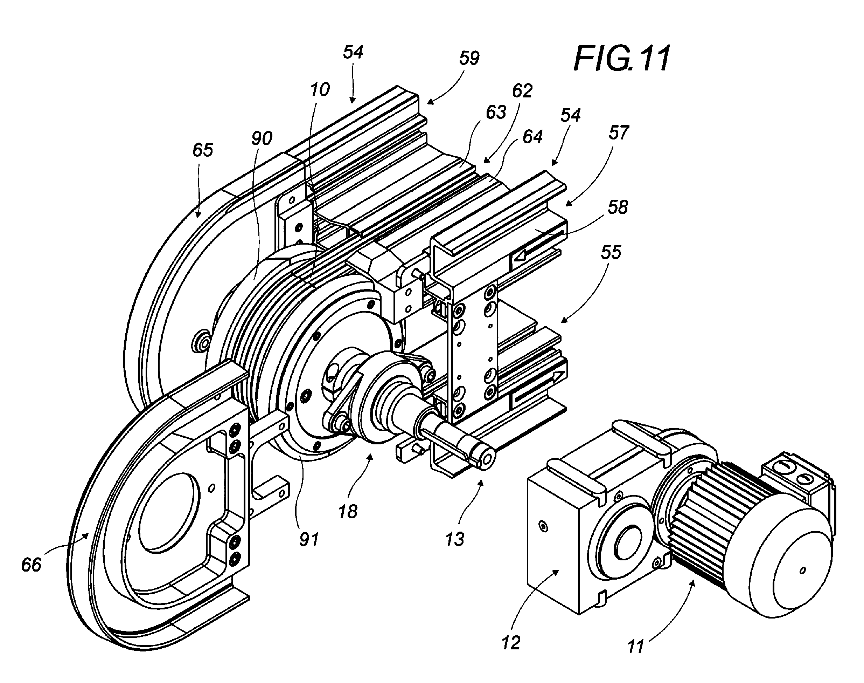

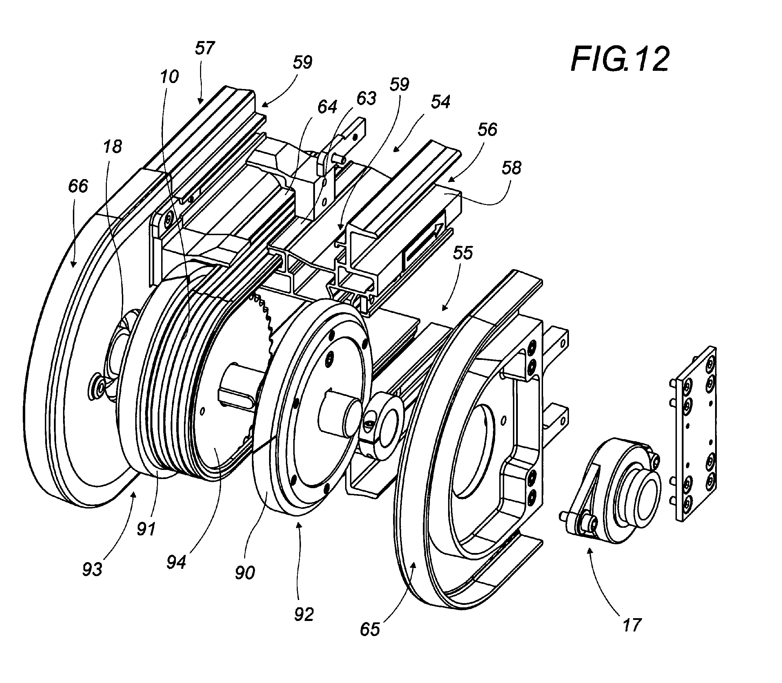

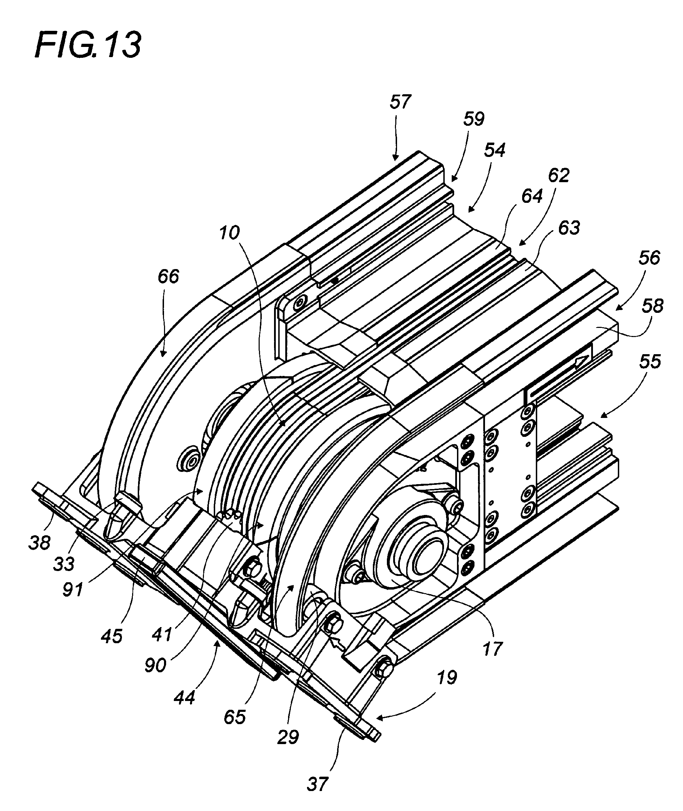

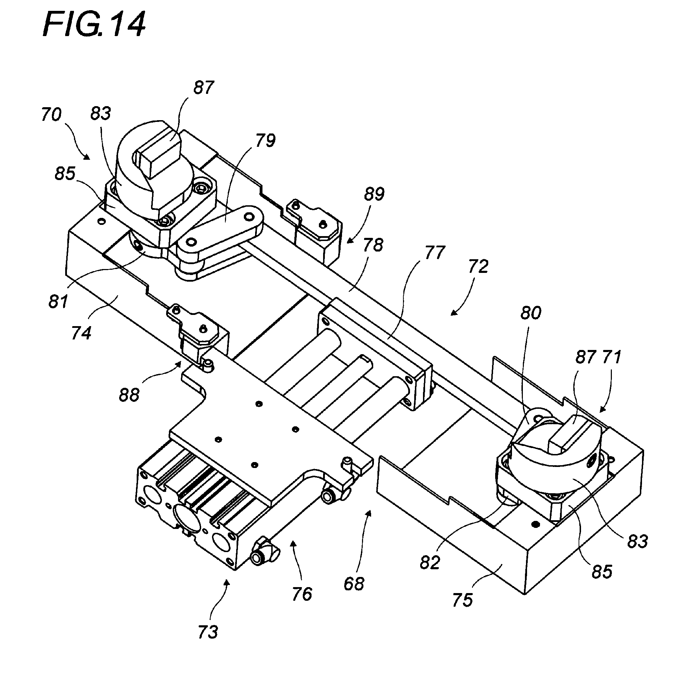

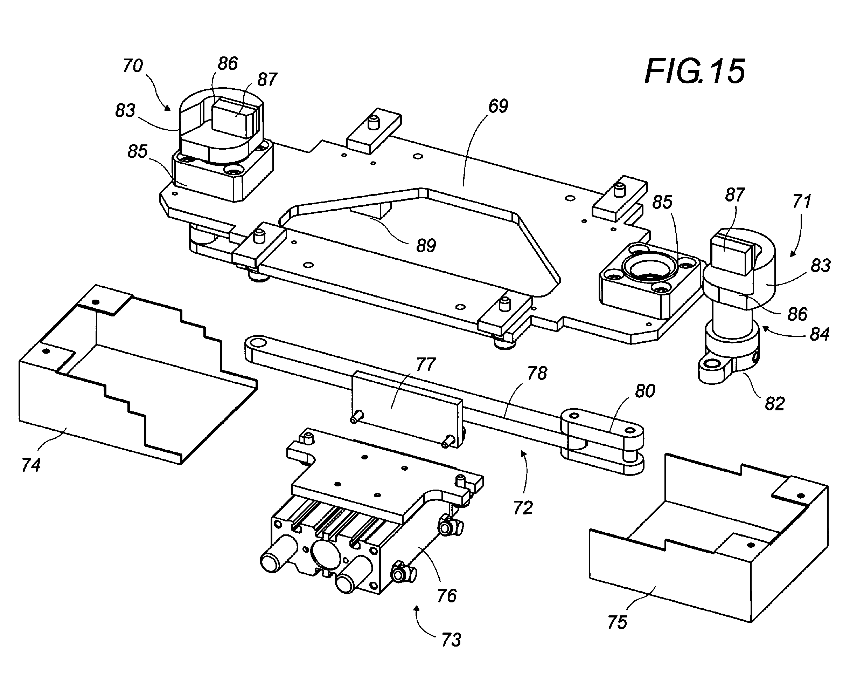

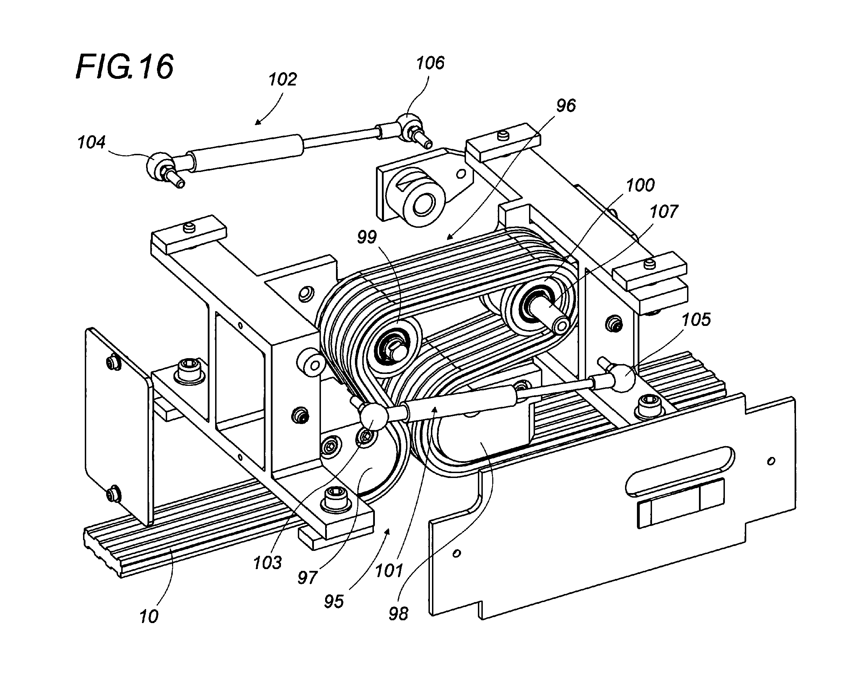

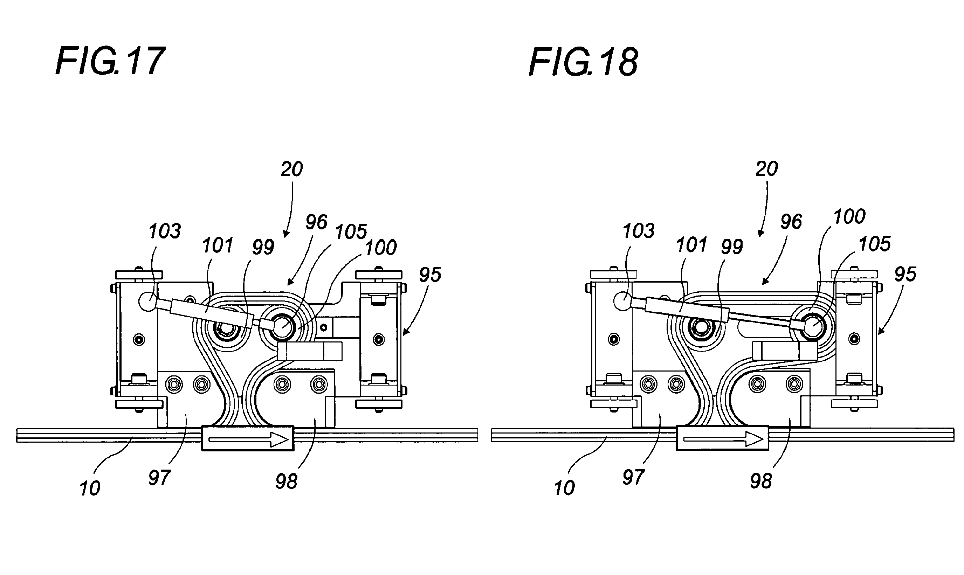

D'autres caractéristiques et avantages de l'invention apparaîtront dans la description qui suit, donnée à titre d'exemple et accompagnée des dessins dans lesquels :
. la figure 1 est une vue d'ensemble en perspective du convoyeur selon l'invention ,
. la figure 2 est un agrandissement d'une palette au niveau d'un de ses taquets de butée en contact contre le butoir d'un pivot de butée,
. la figure 3 est une vue en élévation montrant une des extrémités du convoyeur selon l'invention,
. la figure 4 est une vue en perspective du dessus d'une palette ,
. la figure 5 est une vue en perspective d'une portion de convoyeur sur laquelle est montée une palette ,
. la figure 6 est une vue en perspective du dessous d'une palette,
. les figures 7 et 8 sont respectivement des vues de face et de profil d'une palette ,
. les figures 9 et 10 sont des vues en perspective d'un pignon de palette avec son dispositif de frein, respectivement en éclaté et à l'état monté ,
. les figures 11 et 12 sont des vues en perspective de l'extrémité à l'état partiellement dissocié respectivement motorisée et non motorisée du convoyeur selon l'invention ,
. la figure 13 est une vue en perspective de l'extrémité non motorisée avec la représentation d'une palette en cours de basculement,
. les figures 14 et 15 sont des vues de la butée pneumatique respectivement :
   - en perspective transparente,
   - en perspective éclatée,
. la figure 16 est une vue en perspective montrant l'ensemble du dispositif de réglage de la tension de la chaîne,
. les figures 17 et 18 sont des vues de profil montrant le dispositif de réglage de la tension de la chaîne dans ses deux positions extrêmes.

La présente invention se rapporte à un convoyeur 1 monochaîne à palettes représenté dans son ensemble sur la figure 1.

Le convoyeur 1 se présente sous la forme d'un corps rectiligne 2 soutenu par des montants avant tels que 3 et des montants arrière tels que 4. Ce corps rectiligne est formé par des profilés de guidage et de roulage et de protection.

Les montants 3 et 4 sont fixés chacun au corps du convoyeur par une partie coudée telle que 5 et sont chacun en contact avec le sol par une plaque d'appui telle que 6 montée sur un fût tel que 7 qui s'engage de façon réglable dans la partie inférieure du montant correspondant.

On a présenté un convoyeur horizontal soutenu pas des montants. Il est bien entendu que cet exemple de réalisation n'est pas limitatif mais qu'au contraire tout convoyeur présentant les moyens généraux de l'invention entre dans le cadre de la présente protection. Il s'agit notamment des convoyeurs en rampe inclinée et des convoyeurs verticaux.

Le convoyeur 1 comporte des extrémités de renvoi : une extrémité avant 8 motorisée et une extrémité arrière 9 non motorisée pour le renvoi de mouvement d'une chaîne motrice unique 10 entraînée à partir de l'extrémité avant 8 par un moteur électrique 11 à travers un ensemble réducteur 12 en prise sur un arbre d'entraînement 13 d'un tambour de renvoi 14. L'extrémité arrière 9 non motorisée présente également un tambour de renvoi 15 mais avec un arbre 16 libre porté par des paliers tels que 17 et 18.

Le convoyeur 1 porte et entraîne en translation des palettes 19 porteuses chacune d'une charge.

Le moyen d'entraînement des palettes 19 est la chaîne motrice unique 10 montée sur la partie centrale des tambours de renvoi 14 et 15 en extrémité avant 8 et arrière 9 du convoyeur. La chaîne motrice 10 est entraînée par le tambour de renvoi 14 de l'extrémité avant motorisée dont l'arbre d'entraînement 13 se prolonge dans le réducteur 12 en vue de son entraînement en rotation.

La chaîne motrice 10 est mise en tension et réglée en tension par un dispositif de réglage de la tension 20 à boucle variable représenté sur les figures 16 à 18 et qui sera décrit ci-après.

La chaîne unique 10 entraîne en translation le long de son corps les palettes 19 portées à roulement par la structure du convoyeur. Ces palettes 19 sont destinées à supporter et à transférer différentes pièces, composants ou sous-ensembles pour approvisionner une machine d'assemblage ou de finition dans une unité de production.

Elles comportent un corps 21 de forme générale en profil d'avion présentant une partie centrale 22 et deux ailes côté gauche 23 et côté droit 24 à retours respectifs 25 et 26 vers le bas. Ces retours portent chacun un couple de roulettes de gauche 27, 28 et un couple de roulettes de droite 29, 30 d'appui de roulage et comportent de chaque côté respectivement un bloc de butée de référence 31 et 32. Les ailes 23 et 24 portent chacune un couple de galets de guidage respectivement 33, 34 et 35, 36 qui permettent d'assurer une grande stabilité de roulage. Chaque palette présente en partie supérieure une série gauche et droite de plots tels que 37 et 38 de réception et de prise d'appui de la charge à transporter.

La partie centrale 22 est flanquée de deux patins stabilisateurs de gauche et de droite tels que respectivement 39 et 40 et comporte en son centre un train de deux pignons de prise de chaîne 41 et 42 venant s'engrener sur la chaîne motrice unique 10.

Les blocs de butée de référence 31 et 32 sont présents respectivement sur chacun des flancs de la palette sous la forme d'un taquet de butée référencé également 31 et 32 à corps transversal au flanc de la palette et présentant chacun une encoche telle que 43 visible plus particulièrement sur la figure 2, et les figures de 4 à 8. Chaque taquet de butée 31 ou 32 vient par son encoche 43 en appui de butée contre un butoir respectif d'un ensemble transversal de deux butées lorsque ce butoir se trouve dans sa position de butée.

Chaque palette 19 présente en partie supérieure médiane une poutre-entretoise 44 équipée à chacune de ses extrémités d'un tampon 45 et 46 en matière élastique permettant d'absorber les chocs entre deux palettes successives lors d'une configuration en accumulation, c'est-à-dire en suite linéaire à l'état juxtaposé.

La chaîne motrice unique 10 entraîne chaque palette en translation lorsque les pignons de prise de chaîne 41 et 42 sont non tournants. Il s'agit de pignons freinés jusqu'à une valeur prédéterminée en fonction des caractéristiques du convoyeur. Ils restent non tournants tant que l'effort qui leur est appliqué est inférieur au couple de freinage. Inversement, ils tournent dès que cet effort dépasse la force de freinage. Ceci arrive à chaque fois que les palettes sont freinées ou arrêtées, par exemple en butée.

Cet effet est apporté par un dispositif de freinage représenté sur les figures 9 et 10.

Ce dispositif freine les pignons à une valeur prédéterminée de couple par une force contraire provenant par exemple d'une friction. Comme visible en détail sur la vue en éclaté de la figure 9, il est constitué essentiellement par un arbre 47, par exemple sous la forme d'une douille, sur lequel chaque pignon 41 ou 42 est monté à roulement. La rotation de chaque pignon est freinée par l'effet d'un ressort de compression 48 monté sur l'arbre 47 et qui contraint latéralement le pignon par une compression réglable du ressort 48 et d'un jeu de disques de friction 49. Cette contrainte réglable est apportée par un écrou de serrage 50. Un disque terminal 51 et une série de rondelles, disques ou platines 52, 53 assurent le maintien mécanique de l'ensemble. Cette compression réglable apporte la force réglable du couple de freinage.

Les palettes 19 se déplacent en translation en roulant par l'intermédiaire des roulettes sur la structure porteuse du convoyeur formée de profilés et sont guidées dans ceux-ci par les galets de guidage.

A cet effet, le corps du convoyeur 1 est formé d'un ensemble de profilés en deux étages comme visible sur la figure 1 et sur les figures représentant les extrémités.

La partie rectiligne du corps du convoyeur est formée de deux profilés composites constituant un rail de guidage supérieur 54 et un rail de guidage inférieur 55 de déplacement des palettes en translation d'approvisionnement pour le rail supérieur 54 et en translation de recyclage en sous-face du convoyeur pour le rail inférieur 55.

Le profilé composite du rail de translation supérieur 54 se compose d'abord de deux profilés de bordure 56 et 57 à section en forme de U couché dont chaque aile inférieure telle que 58 sert de piste de roulage aux roulettes porteuses de chaque palette. Ces profilés de bordure 56 et 57 présentent une aile en partie dorsale délimitant à chaque fois avec le dos du profilé de bordure correspondant une forme rectiligne en cornière telle que 59 le long de chacune desquelles se déplacent respectivement deux à deux, les quatre galets de guidage de chaque palette.

La structure de bordure du rail supérieur 54 se poursuit par des profilés inférieurs de rigidification reliés entre eux par une structure centrale profilée 60 présentant plusieurs canaux dont un canal central 61 le long duquel se déplace la chaîne motrice 10. Ce canal central 61 est ouvert en partie médiane supérieure selon une fente rectiligne longitudinale 62 correspondant à l'alignement des pignons 41 et 42 d'entraînement des palettes 19 et dans laquelle ils pénètrent pour entrer en prise avec la chaîne motrice 10.

Les formes en cornières profilées telles que 59 de guidage se font face délimitant entre elles un espace d'entraînement dont le fond est occupé par la chaîne motrice visible par la fente longitudinale 62.

Les flancs verticaux des profilés de guidage servent de piste de roulage aux galets de guidage afin de rendre stable le mouvement de translation des palettes.

Sur l'extérieur des profilés de bordure viennent se fixer les parties coudées 5 des montants supportant le convoyeur dans sa version horizontale.

Le corps du convoyeur 1 se poursuit par des profilés annexes destinés à renforcer la structure et à fermer longitudinalement vers le bas le logement de la chaîne et à ne laisser qu'une fente longitudinale médiane 62 pour la prise des pignons 41 et 42 sur la chaîne 10, par exemple sous la forme de deux tôles parallèles d'habillage et de protection 63 et 64 séparées par la fente 62 de prise de chaîne.

Aux extrémités du convoyeur 1 les tôles d'habillage et de protection 63 et 64 s'interrompent pour laisser la chaîne 10 et les tambours de renvoi 14 et 15 à nu. Par contre, les profilés de bordure et de guidage se poursuivent en étant raccordés chacun à une partie curviligne 65 ou 66 à section en U couché pour former l'arrondi et le demi-cercle du changement de direction permettant le renversement ou le basculement guidé des palettes 19.

En fonctionnement normal, les palettes 19 se déplacent en translation le long des profilés du convoyeur jusqu'à ses extrémités où elles sont arrêtées provisoirement pour leur déchargement par une butée de déchargement, à la suite de quoi elles sont basculées pour suivre le trajet retour le long de la sous-face du convoyeur 1 en vue de leur recyclage.

Elles sont arrêtées par une butée ou un ensemble transversal de butées à chaque endroit important. Il s'agit des positions de chargement et de déchargement à chacune des extrémités du convoyeur. D'autres positions d'arrêt appelées positions de retenue sont nécessaires, d'abord sur le trajet retour sous la position de chargement où l'on ne peut admettre une autre palette tant que celle de dessus n'est pas chargée et une position d'attente voisine de l'extrémité qui peut générer une accumulation.

Le terme butée a été utilisé ci-dessus pour désigner un ensemble transversal de butées tel que 67 qui réalise la fonction de butée pour une palette. Il s'agit en réalité à chaque fois d'un ensemble transversal unitaire de deux butées, comme décrit ci-après, une butée pour chaque taquet de butée 31, 32 de chaque palette 19, ensemble destiné à stopper l'avance des palettes en cas de nécessité, par exemple lors de l'arrêt momentané de la machine d'assemblage à servir en pièces et en fonctionnement normal lors du chargement et du déchargement des palettes.

On distingue ainsi des butées de retenue disposées par exemple à l'extrémité du convoyeur mais aussi des butées de retenue ou d'accumulation au voisinage des extrémités pour créer une accumulation de palettes.

Il existe aussi des butées de chargement et de déchargement à chacune des extrémités du convoyeur.

Chacune des butées a pour but d'immobiliser une palette pendant le temps nécessaire à son chargement ou à son déchargement ou à la création d'une accumulation ou file d'attente pour les butées de retenue.

Chaque ensemble 67 de butées est fixé sur le profilé de l'étage sur lequel se déplacent les palettes à immobiliser. Cette fixation est solidaire du corps du convoyeur ou démontable de manière à pouvoir déplacer l'ensemble 67 de butées le long du convoyeur et le fixer à un autre endroit en cas de besoin.

En se référant aux figures 14 et 15, chaque ensemble 67 de butées se présente sous la forme d'un ensemble mécanique formé d'une embase 68, d'une platine supérieure 69 portant deux plots pivotants 70 et 71 de butée et d'un mécanisme d'actionnement en pivotement 72 de ces plots de butée dont l'élément moteur est un vérin pneumatique 73.

L'embase 68 renferme le mécanisme d'actionnement 72 protégé de chaque côté par un carter 74 et 75.

Ce mécanisme d'actionnement 72 se compose d'un corps 76 et d'une tête de vérin 77 fixée à un ensemble articulé formé d'une traverse de translation 78 dont chaque extrémité est reliée par une biellette 79 et 80 à un levier inférieur d'actionnement 81 et 82 de chaque plot pivotant de butée 70 et 71.

Les leviers inférieurs 81 et 82 sont ceux équipant à chaque fois la base du corps de chaque plot pivotant de butée 70 et 71, corps formé chacun d'une tête de butée 83, d'une partie centrale 84 en axe cylindrique de pivotement et d'une partie inférieure comportant une bague de palier 85 et le levier d'actionnement 81 ou 82.

La tête de butée 83 présente une forme cylindrique à évidement 86 dont le front arrière de l'évidement est garni d'un tampon 87 en matière synthétique par exemple en polyuréthane faisant office de butoir.

Comme on peut le voir sur la figure 14 montrant les deux positions de la traverse de translation 78, la poussée de la tête 77 du vérin pneumatique 73 sur cette traverse de translation 78 entraîne les biellettes 79 et 80 vers l'avant ce qui fait pivoter les plots de butée 70 et 71 dans une position traversante pour la palette alors que le retrait de la tête 77 du vérin et par conséquent celui de la traverse de translation 78 les ramène par pivotement dans une position de butée dans laquelle le tampon 87 faisant office de butoir est transversal à la ligne d'avancement des palettes 19. Les palettes 19 sont ainsi arrêtées de chaque côté par le contact par l'encoche 43 de leur taquet d'arrêt 31 ou 32 contre le tampon respectif 87 faisant office de butoir.

Des détecteurs par exemple à induction 88 et 89 placés à l'intérieur de l'ensemble de butées permettent de renseigner l'organe de commande sur la position de la traverse de translation 78 et donc sur la position des deux plots pivotants de butée 70 et 71.

Le choix du vérin pneumatique fait suite à l'obligation de rester propre, car il n'existe aucune fuite possible de liquide comme dans le cas des vérins hydrauliques.

Il peut exister aussi des butées électriques ou mécaniques assurant la même fonction.

On examinera maintenant une des extrémités du convoyeur sur laquelle se renversent les palettes, l'autre extrémité étant identique pour cette fonction.

Pour des raisons de clarté la description qui suit est effectuée en référence à la figure 12.

Arrivées à l'extrémité du convoyeur 1, après leur déchargement, les palettes 19 basculent et se renversent pour passer en sous-face du convoyeur et être entraînées par la même chaîne unique 10 vers la partie inférieure de l'autre extrémité le long du trajet retour en vue d'une réutilisation sur la partie supérieure du convoyeur. Le mouvement inverse se produit dans le cas de la remontée de la palette. Celle-ci se redresse et bascule vers le haut.

Après le déchargement d'une palette, les plots pivotants 70 et 71 de butée qui la retenaient s'effacent, lui permettant d'avancer vers l'extrémité adjacente proche du convoyeur.

Les roulettes porteuses de la palette s'engagent dans les parties curvilignes demi-circulaires 65 et 66 des profilés de bordure assurant le guidage et le roulage qui vont la porter et la guider pendant tout le mouvement de renversement.

En raison des différences de rayon de courbure, la vitesse linéaire le long des profilés de bordure et celle d'entraînement par la chaîne ne sont pas les mêmes.

Pour éviter les à-coups, on dissocie le lien cinématique entre la chaîne et la palette.

Cette dissociation cinématique se produit automatiquement car, en raison du plus grand effort sur les pignons 41 et 42 de la palette, ceux-ci arrivent à tourner malgré le freinage car la valeur du couple dépasse la valeur maximale de freinage.

Cependant, pour assurer la motricité du mouvement de renversement, il faut un support circulaire tournant d'entraînement. Celui-ci provient de deux anneaux parallèles 90 et 91 montés sur des disques de flanc 92 et 93 entre lesquels se trouve un élément central cylindrique denté 94 formant la partie centrale du tambour de renvoi sur lequel la chaîne motrice est montée. Ces anneaux 90 et 91 par exemple en caoutchouc, sont des garnissages en surépaisseur en forme de bandes de roulement habillant les chants circulaires de bordure des deux disques de flanc 92 et 93 bordant latéralement la partie centrale dentée 94 du tambour de renvoi. Comme représenté, ces bandes de roulement entrent en contact de friction-entraînement avec les zones en regard de la partie inférieure correspondante du fond de la palette 19 prévues à cet effet.

Ainsi, les palettes 19 remontent ou descendent en se retournant à la vitesse de la chaîne motrice 10 en uniformité dynamique avec elle par un mouvement doux et progressif sans occasionner ni d'à-coups ni de tension anormale dans la chaîne et dans la mécanique.

Le convoyeur comporte également un tendeur de chaîne original 20 représenté sur les figures 15 à 17.

Selon ce tendeur, la chaîne 10 passe dans un ensemble mécanique de roulement 95 pour former une boucle de déviation 96 de longueur modifiable. Cet ensemble mécanique 95 comporte deux galets de renvoi, l'un d'entrée 97 et l'autre de sortie 98 et deux pignons de boucle 99 et 100 sur lesquels passe la chaîne en supportant la boucle de déviation. Le pignon amont 99 c'est-à-dire celui se trouvant en premier dans le sens de déplacement de la chaîne est fixe alors que le pignon aval 100 est déplaçable en rapprochement ou en éloignement du pignon amont 99 sous l'effet d'un moyen d'actionnement par exemple un couple de vérins 101 et 102 à gaz à extrémités rotulées fixes 103 et 104 et mobiles 105 et 106. Les extrémités mobiles par le vérin à gaz sont montées sur les extrémités du pignon aval déplaçable. Ces vérins sont montés en parallèle de chaque côté latéral des pignons de boucle par chacune de leurs extrémités fixes sur un point fixe et par chacune de leurs extrémités mobiles sur une des extrémités de l'axe du pignon aval déplaçable 100 ce qui permet par le déplacement sous tension élastique de ce pignon aval d'assurer automatiquement et en permanence une tension optimale de la chaîne.

La chaîne 10 est guidée en entrée et en sortie par les deux galets de renvoi 97 et 98.

Cet ensemble de tension permet un maintien constant en tension de la chaîne sans à-coups ni friction pouvant provoquer un échauffement.

## Revendications

1. Convoyeur de palettes à entraînement par chaîne et à accumulation de celles-ci comprenant au moins un pignon d'entraînement et à chacune des extrémités du convoyeur un dispositif de basculement des palettes au niveau de chaque tambour de renvoi ainsi qu'un dispositif de réglage de la tension de la chaîne, **caractérisé par** une chaîne unique (10) et en ce que chaque pignon d'entraînement (41) et (42) de chaque palette (19) est freiné, chaque dispositif de basculement de chaque palette (19) se composant d'au moins une surface d'entraînement sur chaque tambour de renvoi (14) et (15) coopérant avec la base de chaque palette (19), convoyeur **caractérisé** ensuite par au moins un ensemble transversal (67) de butée de renvoi et au moins un ensemble (67) de butée d'accumulation et en ce que le dispositif de réglage (20) de la tension de la chaîne (10) comporte un mécanisme tendeur de chaîne qui agit sur la boucle non soumise à la tension dynamique de la chaîne.

2. Convoyeur selon la revendication 1
**caractérisé en ce que** la surface d'entraînement se compose de deux anneaux (90) et (91) sous la forme de deux garnissages en bandes épaisses de roulement au niveau du tambour de renvoi.

3. Convoyeur selon la revendication 2
**caractérisé en ce que** les bandes de roulement formant les anneaux (90) et (91) sont montées sur des disques de flanc (92) et (93) constituant avec un élément central denté (94) les séparant, les tambours d'extrémité (14) et (15).

4. Convoyeur selon la revendication 1
**caractérisé en ce que** chaque ensemble transversal (67) de butée est à commande pneumatique.

5. Convoyeur selon la revendication 4
**caractérisé en ce que** chaque ensemble transversal (67) de butée à commande pneumatique, comporte un ensemble mécanique formé d'une embase (68), d'une platine supérieure (69) portant deux plots pivotants de butée (70) et (71) et d'un mécanisme pneumatique d'actionnement en pivotement (72) de ces plots de butée dont l'élément moteur est un vérin pneumatique (73).

6. Convoyeur selon la revendication 1
**caractérisé en ce que** les palettes (19) comportent un corps (21) de forme générale en profil d'avion présentant une partie centrale (22) et deux ailes chacune avec un retour vers le bas, ces retours portant chacun un couple de roulettes porteuses de gauche (27, 28) et un couple de roulettes porteuses de droite (29, 30) d'appui de roulage et ce corps comportant de chaque côté respectivement un bloc de butée de référence (31) et (32), les ailes portant chacune un couple de galets de guidage respectivement (33, 34) et (35, 36), chaque palette (19) présentant en partie supérieure une série gauche et droite de plots tels que (37) et (38) de réception et de prise d'appui de la charge à transporter.

7. Convoyeur selon la revendication précédente **caractérisé en ce que** la partie centrale (22) est flanquée de deux patins stabilisateurs de gauche et de droite tels que respectivement (39) et (40) et comporte en son centre un train de deux pignons de prise de chaîne (41) et (42) venant s'engrener sur la chaîne motrice unique (10).

8. Convoyeur selon la revendication 6
**caractérisé en ce que** les blocs de butée de référence (31) et (32) sont présents respectivement sur chacun des flancs de chaque palette (19) sous la forme d'un taquet de butée à corps transversal au flanc de la palette (19) et présentant chacun une encoche (43) par laquelle chaque taquet de butée vient en appui de butée contre un tampon (87) respectif d'un ensemble transversal (67) de butée lorsque ce tampon (87) se trouve dans sa position de butée.

9. Convoyeur selon la revendication 6
**caractérisé en ce que** chaque palette (19) présente en partie supérieure médiane une poutre-entretoise (44) équipée à chacune de ses extrémités d'un tampon (45) et (46) en matière élastique permettant d'absorber les chocs entre deux palettes successives lors d'une configuration en accumulation, dans laquelle les palettes (19) sont disposées en suite linéaire.

10. Convoyeur selon la revendication 7
**caractérisé en ce que** les pignons d'entraînement (41) et (42) des palettes (19) sont freinés à une valeur déterminée de couple.

11. Convoyeur selon la revendication 10
**caractérisé en ce que** les pignons d'entraînement (41) et (42) des palettes (19) sont freinés par friction.

12. Convoyeur selon la revendication 3
**caractérisé en ce que** le mécanisme d'actionnement de chaque ensemble transversal (67) de butée pneumatique se compose d'une tête de vérin (77) d'un vérin pneumatique (73), d'une traverse de translation (78) dont chaque extrémité est reliée par une biellette (79) et (80) à un levier inférieur d'actionnement (81) et (82) de chaque plot pivotant de butée (70) et (71) à butoir en tampon (87) les faisant pivoter dans une position traversante pour la palette (19) alors que le retrait du vérin (73) les ramène par pivotement dans une position de butée contre le tampon (87) dans laquelle le tampon (87) est transversal à la ligne d'avancement de la palette.

13. Convoyeur selon la revendication 12
**caractérisé en ce que** les leviers inférieurs d'actionnement (81) et (82) sont ceux équipant à chaque fois le corps du plot pivotant de butée (70) ou (71) formé chacun d'une tête de butée (83), d'une partie centrale cylindrique de pivotement et d'une partie inférieure comportant une bague de palier (85) et un des leviers d'actionnement (81) ou (82).

14. Convoyeur selon la revendication 13
**caractérisé en ce que** la tête de butée (83) présente une forme cylindrique évidée dont le front arrière de la cavité est garnie d'un tampon (87) en matière synthétique.

15. Convoyeur selon la revendication 13
**caractérisé en ce que** les bandes de roulement habillant en surépaisseur les chants périphériques des deux disques de flanc (92) et (93) bordant latéralement un élément central d'entraînement porte-chaîne pour entrer en contact de friction-entraînement avec les zones en regard de la partie inférieure correspondante du fond de la palette (19).

16. Convoyeur selon la revendication 1
**caractérisé en ce que** le dispositif de réglage (20) de la tension de la chaîne (10) est un ensemble mécanique de roulement formant une boucle de déviation de longueur modifiable comportant deux galets de renvoi (97) et (98), l'un d'entrée (97) et l'autre de sortie (98) et deux pignons (99) et (100) sur lesquels passe la chaîne en supportant la boucle de déviation, le pignon amont (99) est fixe alors que le pignon aval (100) est déplaçable en rapprochement ou en éloignement du pignon amont (99) sous l'effet d'un moyen d'actionnement.

17. Convoyeur selon la revendication 10
**caractérisé en ce que** le moyen d'actionnement du pignon aval est un couple de vérins à gaz (101) et (102) à extrémités rotulées (103,104) et (105,106) ces vérins étant montés en parallèle de chaque côté latéral des pignons par chacune de leurs extrémités sur un point fixe et par chacune de leurs autres extrémités sur une des extrémités de l'axe (107) du pignon aval déplaçable (100).
